# EUROPEAN PATENT APPLICATION

(11) **EP 2 299 197 A1**
(43) Date of publication of application: **23.03.2011**
(21) Application number: 09735765.1
(22) Date of filing: 22.04.2009
(51) Int. Cl.: F24F 7/08

(54) **HEAT EXCHANGER AIR PATH FORMING PLATE AND HEAT EXCHANGER EMPLOYING THE SAME**

(30) Priority: 24.04.2008 JP 2008113574
(71) Applicant: Panasonic Corporation, Kadoma-shi Osaka 571-8501 (JP)
(72) Inventor: ORITO, Shinobu, Osaka 540-6207 (JP); KUBO, Yoshihide, Osaka 540-6207 (JP); HASHIMOTO, Toshihiko, Osaka 540-6207 (JP); FUKUDA, Minoru, Osaka 540-6207 (JP)
(74) Representative: Grünecker, Kinkeldey, Stockmair & Schwanhäusser Anwaltssozietät
(86) International application number: PCT/JP2009/001844
(87) International publication number: WO 2009/130897

(57) **Abstract**

The present invention provides an air path forming plate used for heat exchangers having an intake air path between an outdoor intake port for capturing outdoor air and an indoor flow-in port and having an exhaust air path between an indoor intake port for capturing indoor air and an outdoor exhaust port. Each of the intake air path and the exhaust air path is made of a metal plate having a bend section on which press marks aligned like a perforation line are formed.

## Description

### TECHNICAL FIELD

The present invention relates to an air path forming plate for heat exchangers and a heat exchanger using the same.

### BACKGROUND ART

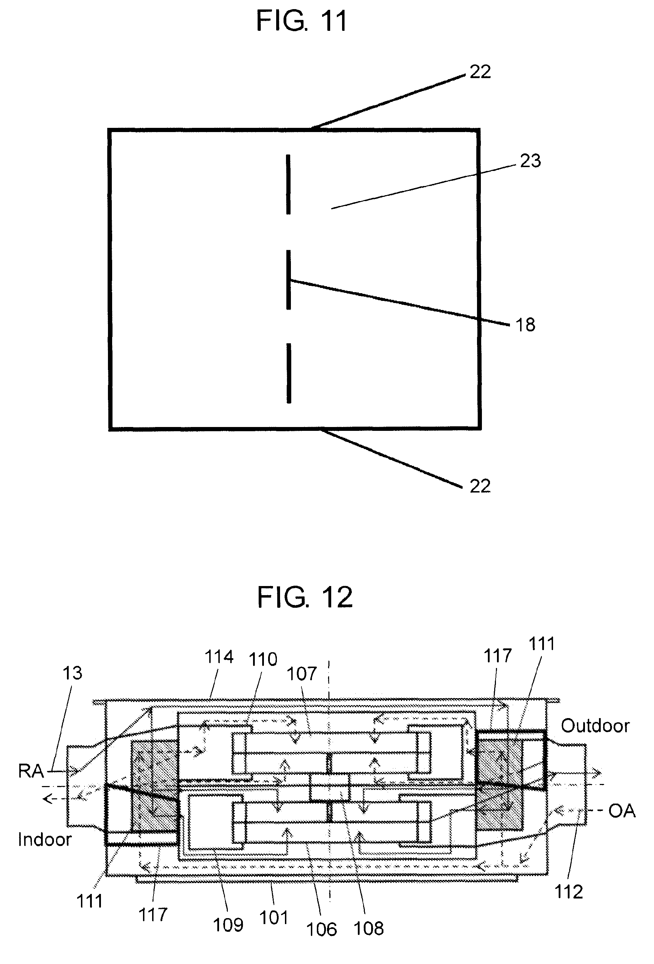

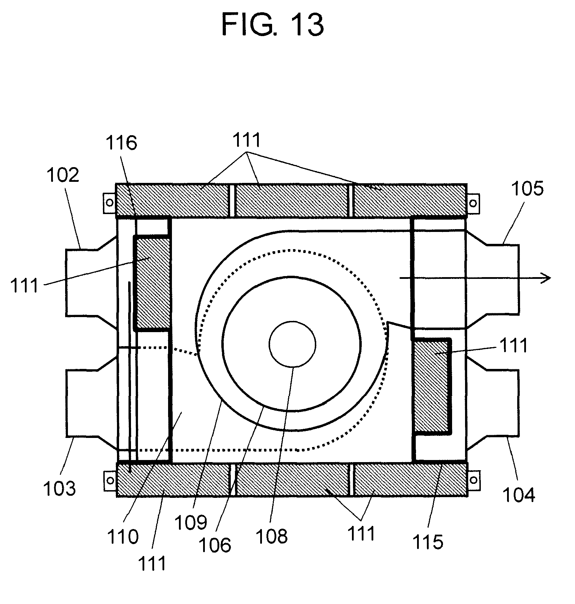

A conventional air path forming plate for heat exchangers will be described with reference to Figs. 12 through 15. Fig. 12 is a side view showing the location of the air path forming plate in the structure of a heat exchanger. Fig. 13 is a bottom view showing the location of the air path forming plate in the structure.

Heat exchanger 114 has inspection cover 101 on the bottom, and indoor intake port 102, indoor flow-in port 103, outdoor intake port 104, and outdoor exhaust port 105 on the side. Motor 108, exhaust fan casing 109 disposed outside exhaust blade 106, and intake fan casing 110 disposed outside intake blade 107 are located in the middle section of heat exchanger 114. Exhaust blade 106 and intake blade 107 are attached to motor 108. Heat exchange elements 111 are arranged on the peripheries of exhaust fan casing 109 and intake fan casing 110.

Outdoor air comes in outdoor intake port 104 and flows through intake air path forming plate 115, heat exchange elements 111, intake blade 107, air duct 117, and indoor flow-in port 103 into indoors. Outdoor intake port 104 through indoor flow-in port 103 constitute intake air path 112.

Return air passes indoor intake port 102 and flows through exhaust air path forming plate 116, heat exchange elements 111, exhaust blade 106, air duct 117, and goes out outdoor exhaust port 105 in outdoors. Indoor intake port 102 through outdoor exhaust port 105 constitute exhaust air path (see patent literature 1, for example).

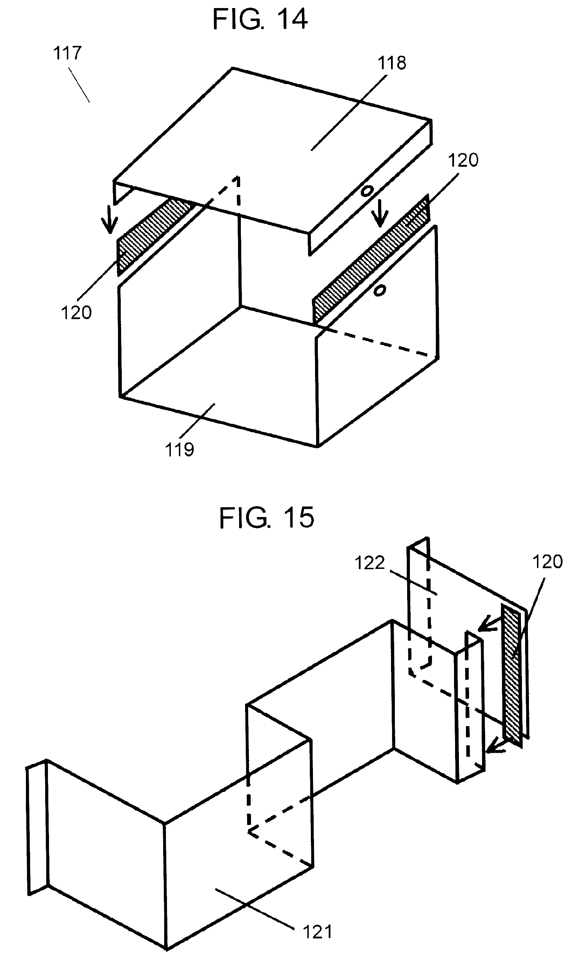

Fig. 14 is a perspective view showing the structure of an air duct of a conventional air path forming plate for heat exchangers. In sheet-metal processing, it is difficult to produce a sheet-metal part of a complicated shape, e.g., having four bend sections, under constraint in manufacturing facilities. Therefore, air duct 117 having four sides is formed as a combined structure of upper plate 118 having two bend sections and lower plate 119 having two bend sections. If tightly sealed connection between the two plates is required, upper plate 118 and lower plate 119 are connected with sealing material 120 therebetween. Air duct 117 is thus completed.

Fig. 15 is a perspective view showing a conventional structure of an intake air path forming plate and an exhaust air path forming plate used for heat exchangers. In sheet-metal processing, it is difficult to produce a sheet-metal part having many bend sections under constraint in manufacturing facilities. Therefore, each of intake air path forming plate 115 and exhaust air path forming plate 116 is formed as a combined structure of left plate 121 and right plate 122. If tightly sealed connection between the two plates is required, left plate 121 and right plate 122 are connected with sealing material 120 therebetween. Intake air path forming plate 115 and exhaust air path forming plate 116 are thus completed.

According to the conventional air path forming plate for heat exchangers, when an intricately designed component is produced by sheet-metal processing, the component has to be formed as a combined structure of divided parts due to constraint in manufacturing facilities. This has increased a parts count. Besides, if tightly sealed connection between parts is required, a gasket or other sealing material is applied to the connecting sections. This has increased cost.

### PATENT LITERATURE

Patent literature 1: Japanese Unexamined Patent Application Publication No. 2006-349223

### SUMMARY OF THE INVENTION

The present invention provides an air path forming plate used for heat exchangers having an intake air path between an outdoor intake port for capturing outdoor air and an indoor flow-in port and having an exhaust air path between an indoor intake port for capturing indoor air and an outdoor exhaust port. Each of the intake air path and the exhaust air path is formed by a metal plate. The metal plate has a bend having press marks aligned like a perforation line so as to be easily bent by hand. This allows the air path forming plate of a complicated shape to be produced as a single part without manufacturing facilities. Such structured air path forming plate contributes to a reduced parts count and has no need for using sealing material.

### BRIEF DESCRIPTION OF THE DRAWINGS

Fig. 1 is a side view showing the location of the air path forming plate in a heat exchanger in accordance with an exemplary embodiment of the present invention.
Fig. 2 is a bottom view showing the location of the air path forming plate in the heat exchanger.
Fig. 3 is a perspective view showing the structure of an air duct of the air path forming plate for the heat exchanger.
Fig. 4 is a plan view showing press marks formed on the air duct of the air path forming plate of the heat exchanger.
Fig. 5 is a perspective view showing the structure of the intake air path forming plate and the exhaust air path forming plate of the heat exchanger.
Fig. 6 is a plan view showing the press marks formed on the intake air path forming plate and the exhaust air path forming plate of the heat exchanger.
Fig. 7 is a perspective view in a state where the air path forming plate is valley-folded on the press marks.
Fig. 8 is a perspective view in a state where the air path forming plate is mountain-folded on the press marks.
Fig. 9 is a side view showing the depth of the press marks of the air path forming plate of the heat exchanger.
Fig. 10 is a plan view showing the interval between the press marks on the air path forming plate of the heat exchanger.
Fig. 11 is a plan view of the air path forming plate, showing the press marks formed so as not to meet with edges of the plate.
Fig. 12 is a side view showing the location of a conventional air path forming plate in a heat exchanger.
Fig. 13 is a bottom view showing the location of the conventional air path forming plate in the heat exchanger.
Fig. 14 is a perspective view showing the conventional structure of an air duct of the air path forming plate for the heat exchanger.
Fig. 15 is a perspective view showing the conventional structure of the intake air path forming plate and the exhaust air path forming plate of the heat exchanger.

### REFERENCE MARKS IN THE DRAWINGS

- 1: indoor intake port
- 2: indoor flow-in port
- 3: outdoor intake port
- 4: outdoor exhaust port
- 5: unit
- 6: exhaust blade
- 7: intake blade
- 8: motor
- 9: exhaust fan casing
- 10: intake fan casing
- 11: heat exchange elements
- 12: intake air path
- 13: exhaust air path
- 14: air duct
- 15: intake air path forming plate
- 16: exhaust air path forming plate
- 17: bend
- 18: press marks
- 19: press mark surface
- 20: mark depth
- 21: mark interval
- 22: plate edge
- 23: inner area
- 50: heat exchanger

### DETAILED DESCRIPTION OF THE PREFERRED EMBODIMENTS

Hereinafter, an exemplary embodiment of the present invention will be described with reference to accompanying drawings.

### (EXEMPLARY EMBODIMENT)

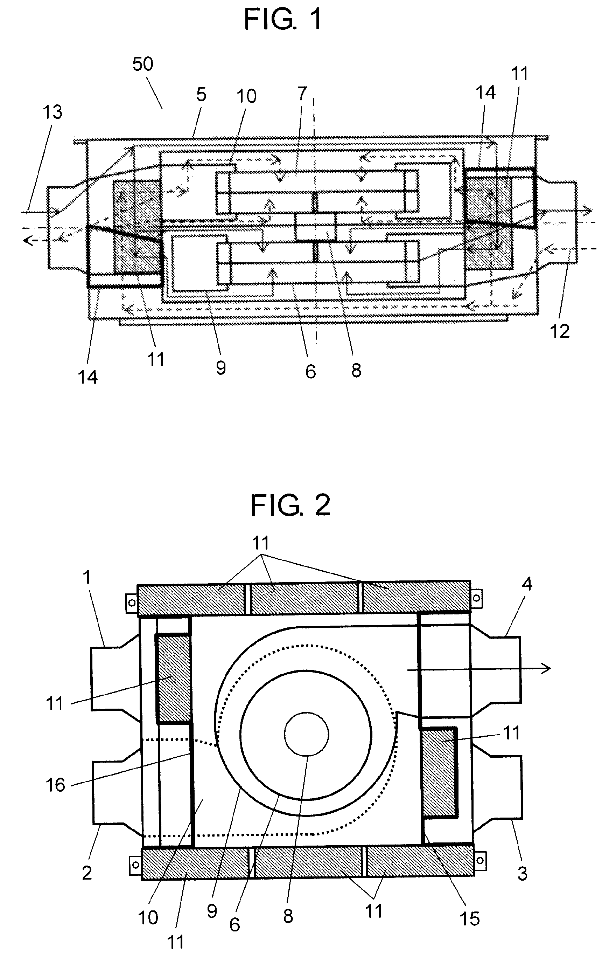

Fig. 1 is a side view showing the location of the air path forming plate in a heat exchanger in accordance with the exemplary embodiment of the present invention. Fig. 2 is a bottom view showing the location of the air path forming plate in the heat exchanger.

Heat exchanger 50 has, as is similar to conventional one, indoor intake port 1, indoor flow-in port 2, outdoor intake port 3, and outdoor exhaust port 4 disposed on the side of box-shaped unit 5. In the middle of unit 5, exhaust blade 6 and intake blade 7 are disposed and attached to motor 8. Exhaust fan casing 9 is disposed outside exhaust blade 6, similarly, intake fan casing 10 is disposed outside intake blade 7. A plurality of heat exchange elements 11 is arranged on the peripheries of exhaust fan casing 9 and intake fan casing 10. Heat exchange elements 11 exchange heat between outdoor air and indoor air.

Outdoor air comes in outdoor intake port 3 and flows through heat exchange elements 11, intake blade 7, and indoor flow-in port 2 into indoors. Outdoor intake port 3 through indoor flow-in port 2 constitute intake air path 12.

Indoor air passes indoor intake port 1 and flows through heat exchange elements 11, exhaust blade 6, and goes out outdoor exhaust port 4 into outdoors. Indoor intake port 1 through outdoor exhaust port 4 constitute exhaust air path 13.

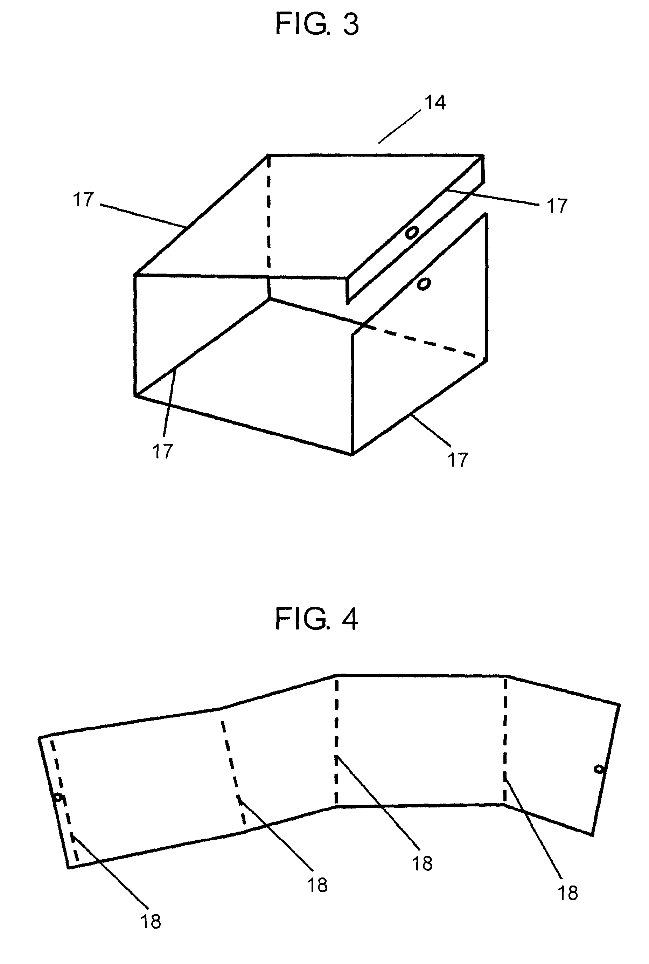

Fig. 3 is a perspective view showing the structure of an air duct of the air path forming plate for the heat exchanger of the embodiment. Fig. 4 is a plan view showing press marks formed on the air duct of the air path forming plate of the heat exchanger.

Air duct 14, intake air path forming plate 15, and exhaust air path forming plate 16 are formed by sheet-metal processing. Air duct 14 works as a part of intake air path 12 and exhaust air path 13.

Hereinafter, the method for processing the components above is described. As is shown in Fig. 4, press marks 18 aligned like a perforation line are formed on a folding line to be bend 17 of air duct plate 31. Air duct plate 31 has been cut into a shape for forming walls of air duct 14.

Bend 17 can be easily formed by folding along press marks 18 by hand. Air duct 14 shown in Fig. 3 is thus obtained.

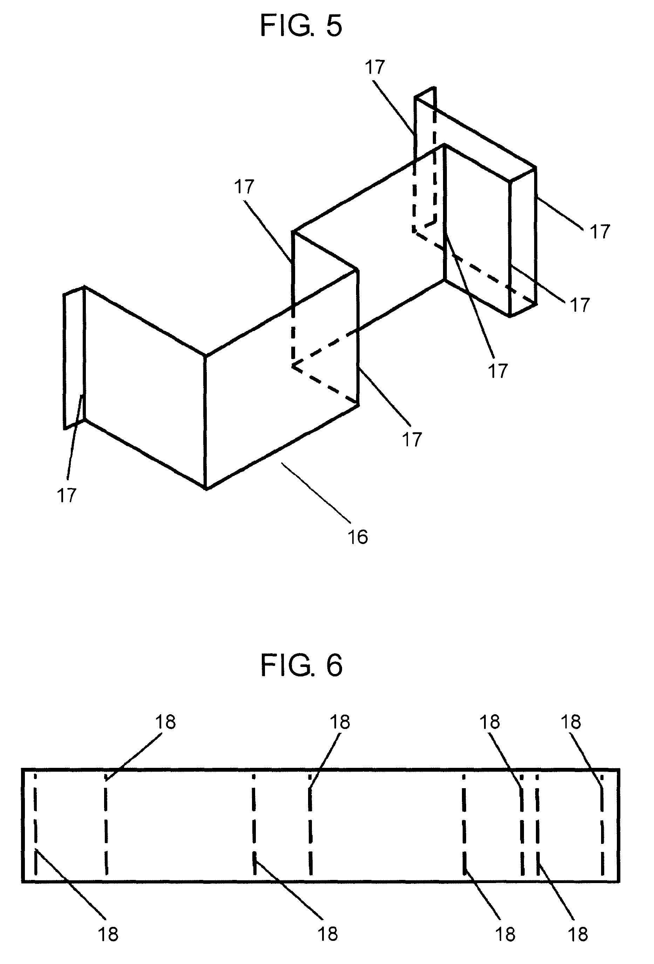

Fig. 5 is a perspective view showing the structure of the intake air path forming plate and the exhaust air path forming plate of the heat exchanger of the embodiment. Fig. 6 is a plan view showing press marks formed on the intake air path forming plate and the exhaust air path forming plate of the heat exchanger.

Intake air path forming plate 15 and exhaust air path forming plate 16 are similarly produced. As is shown in Figs. 5 and 6, press marks 18 are formed at folding position on the plate and then the plate is folded along press marks 18 by hand.

According to the aforementioned method, a component having a complicated shape can be easily formed as a single part by folding by hand, not relying on machines. This contributes not only to decreased parts count but also to suppressed leakage between the intake air path and the exhaust air path that has been needed for heat exchangers.

Press marks 18 are formed by a numerically controlled turret punch press machine. Specifically, a mold of the turret punch press machine moves on a numerically controlled coordinate and presses the plate with high accuracy.

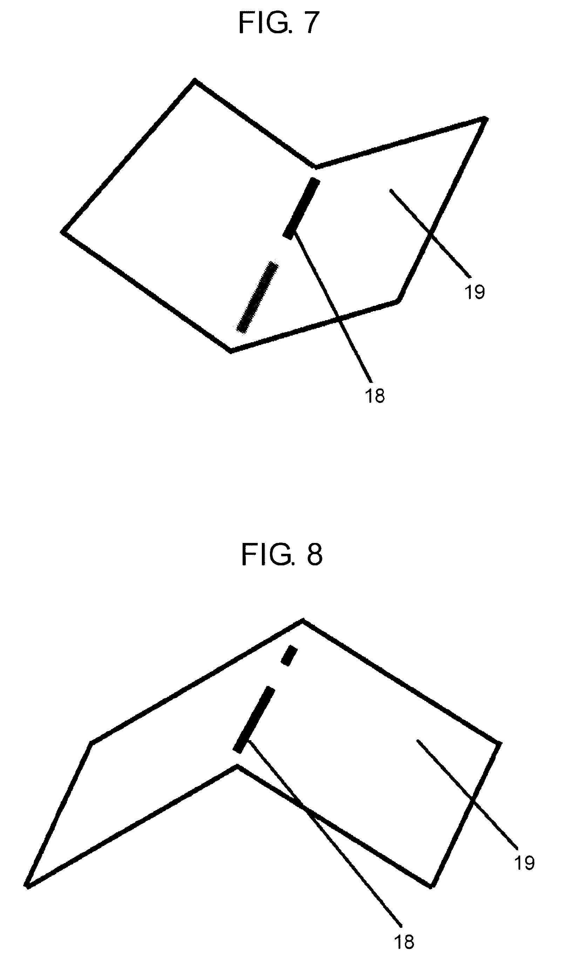

Fig. 7 is a perspective view of the air path forming plate for heat exchangers, showing a state where the press surface of the plate is valley-folded on the press marks. The plate of Fig. 7 is valley-folded on press marks 18 so that press mark surface 19 forms a valley.

Fig. 8 is a perspective view of the air path forming plate for heat exchangers, showing a state where the air path forming plate is mountain-folded on the press marks. The plate of Fig. 8 is mountain-folded on press marks 18 so that press mark surface 19 forms a mountain.

The plate can be valley-folded or mountain-folded on press marks 18 provided on press mark surface 19 of the plate. That is, folding directions are not determined by press mark surface 19.

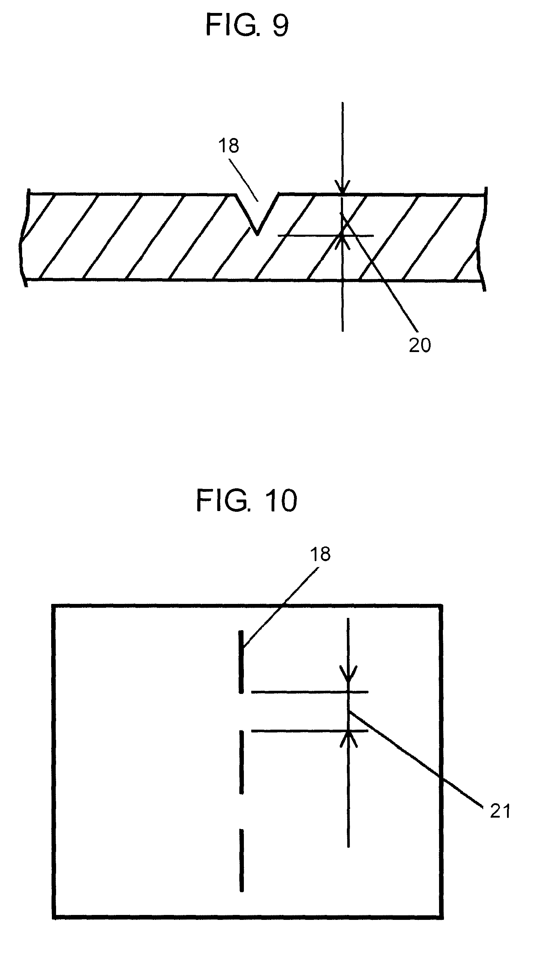

Fig. 9 is a side view showing the depth of the press marks of the air path forming plate of the heat exchanger in accordance with the embodiment. Changing mark depth 20 of press marks 18 allows a plate-with no regard to material or thickness thereof-to be bent with reasonable force.

Fig. 10 is a plan view showing the interval between the press marks on the air path forming plate of the heat exchanger in accordance with the embodiment. Changing mark interval 21 between press marks 18 within the length of a plate allows press marks 18 like a perforation line to be formed on the plate with no regard to the length of bend 17.

Fig. 11 is a plan view of the air path forming plate, showing the press marks formed in an inner area of the plate. Press marks 18 are formed in inner area 23 so as not to meet with plate edge 22. By virtue of absence of press marks 18 on plate edge 22, bend 17 maintains strength even after the plate has been bent.

### INDUSTRIAL APPLICABILITY

The air path forming plate for heat exchangers of the present invention can be easily formed from a single metal plate in spite of having many bend sections. Forming a component with a complicated shape from a single plate decreases a parts count, having no need to use sealing material. Such structured air path forming plate is suitable for an air blower in which reliable sealing is much needed.

## Claims

1. An air path forming plate for heat exchangers comprising:
an intake air path that connects between an outdoor intake port for capturing outdoor air and an indoor flow-in port; and
an exhaust air path that connects between an indoor intake port for capturing indoor air and an outdoor exhaust port,
wherein each of the intake air path and the exhaust air path is made of a metal plate having a bend section at which press marks aligned like a perforation line are formed.

2. The air path forming plate for heat exchangers of claim 1, wherein the press marks are formed by a numerically controlled turret punch press machine.

3. The air path forming plate for heat exchangers of claim 1 or claim 2, wherein the press marks are located on a valley-folded side of the bend section.

4. The air path forming plate for heat exchangers of claim 1 or claim 2, wherein the press marks are located on a mountain-folded side of the bend section.

5. The air path forming plate for heat exchangers of claim 1, wherein a depth of the press marks is changeable.

6. The air path forming plate for heat exchangers of claim 1, wherein an interval between the press marks is changeable.

7. The air path forming plate for heat exchangers of claim 1, wherein the press marks are formed in an inner area so as not to meet with an edge of the metal plate.

8. A heat exchanger comprising:
a box-shaped unit having an indoor intake port for capturing indoor air, an indoor flow-in port, an outdoor intake port for capturing outdoor air, and an outdoor exhaust port on a side surface;
a motor, with an exhaust blade and an intake blade being attached, disposed in the middle of the unit;
an exhaust fan casing disposed outside the exhaust blade;
an intake fan casing disposed outside the intake blade;
a plurality of heat exchange elements for exchanging heat between the outdoor air and indoor air, the heat exchange elements disposed on peripheries of the exhaust fan casing and the intake fan casing; and
an air path forming plate for heat exchangers including:
an intake air path that connects between the outdoor intake port and the indoor flow-in port; and
an exhaust air path that connects between the indoor intake port and the outdoor exhaust port,
wherein each of the intake air path and the exhaust air path is made of a metal plate having a bend section on which press marks aligned like a perforation line are formed.
